# EUROPEAN PATENT APPLICATION

(11) **EP 4 535 206 A1**
(43) Date of publication of application: **09.04.2025**
(21) Application number: 23829988.7
(22) Date of filing: 15.06.2023
(51) Int. Cl.: G06F 21/57

(54) **INFORMATION PROCESSING METHOD, CHIP, ELECTRONIC DEVICE AND COMPUTER-READABLE STORAGE MEDIUM**

(30) Priority: 27.06.2022 CN 202210743218
(71) Applicant: Huawei Technologies Co., Ltd., Shenzhen, Guangdong 518129 (CN)
(72) Inventor: YANG, Xueyi, Shenzhen, Guangdong 518129 (CN); WANG, Ji, Shenzhen, Guangdong 518129 (CN); DING, Jie, Shenzhen, Guangdong 518129 (CN); GU, Jiahui, Shenzhen, Guangdong 518129 (CN)
(74) Representative: Pfenning, Meinig & Partner mbB
(86) International application number: PCT/CN2023/100422
(87) International publication number: WO 2024/001808

(57) **Abstract**

Embodiments of this application provide an information processing method, and relate to the field of information and communication technologies. An electronic device includes a first memory and a second memory. When loading application information, the electronic device obtains an attribute of the application information; if the attribute of the application information is a first attribute, writes the application information into the first memory, or encrypts the application information and writes the encrypted application information into the second memory, where the first memory is disposed in a processor, and the second memory is disposed independently of the processor; and if the attribute of the application information is a second attribute, writes the application information into the second memory. Embodiments of this application further provide an electronic device, a chip, and a computer-readable storage medium. In embodiments of this application, sensitive application information is encrypted and stored in the second memory or stored in plaintext in the first memory, and non-sensitive application information is stored in plaintext in the second memory, so that security of sensitive information processing can be improved.

## Description

This application claims priority to Chinese Patent Application No. 202210743218.0, filed with the China National Intellectual Property Administration on June 27, 2022 and entitled "INFORMATION PROCESSING METHOD, CHIP, ELECTRONIC DEVICE, AND COMPUTER-READABLE STORAGE MEDIUM", which is incorporated herein by reference in its entirety.

### TECHNICAL FIELD

This application relates to the field of information and communication technologies, and in particular, to an information processing method, a chip, an electronic device, and a computer-readable storage medium.

### BACKGROUND

In an electronic device (for example, a mobile terminal, an internet of things device, or a server), information generally exists in three states: a transmission state, a static state, and a used state. The "transmission state" is a state of information transmitted across networks or devices, the "static state" is a state of information stored in a memory, and the "used state" is a state of information being processed. With the enhancement of protection methods applicable to information in the transmission state and information in the static state, an attacker has shifted an attack focus to information in the used state. Common means of attacking the information in the used state include stealing information from a memory through a direct memory access (Direct Memory Access, DMA) attack, a cache (cache) side-channel attack, a cold boot attack, a RowHammer attack, and the like. An existing encryption solution for memory information usually includes a hardware memory encryption method and a software memory encryption method. The software memory encryption method is usually using an encryption engine to encrypt all application information written into a memory, and decrypting the information when the information is read from the memory. Because encryption and decryption involve all application information, a large amount of information needs to be processed, resulting in poor practicability of the solution. The hardware memory encryption method requires disposing additional hardware, resulting in high hardware encryption costs. Therefore, the hardware memory encryption method is not suitable for deployment on most devices, resulting in poor practicability of the solution as well.

### SUMMARY

In view of this, it is necessary to provide an information processing method to resolve the problem of poor practicability of a memory information protection solution in the conventional technology.

A first aspect of embodiments of this application discloses an information processing method, including: when loading application information, obtaining an attribute of the application information; if the attribute of the application information is a first attribute, writing the application information into a first memory, or encrypting the application information and writing the encrypted application information into a second memory, where the first memory is disposed in a processor, and the second memory is disposed independently of the processor; and if the attribute of the application information is a second attribute, writing the application information into the second memory.

Through the technical solution, the application information of the first attribute is allowed to be encrypted and stored in the second memory or stored in plaintext in the first memory, and the application information of the second attribute is stored in plaintext in the second memory, which can improve security of the application information of the first attribute. For example, the application information of the first attribute is sensitive information, and the application information of the second attribute is non-sensitive information. Therefore, the sensitive information is encrypted and stored in the second memory or stored in plaintext in the first memory, to improve security of the sensitive information. In addition, because it is not required to process all application information of the application software in the first memory, the first memory can be used on demand, and storage resource requirements of the first memory are greatly reduced. Therefore, the information processing method has higher availability and has wider application scenarios.

In some embodiments, the first attribute indicates that the application information is sensitive information, the second attribute indicates that the application information is non-sensitive information, the first memory is an on-chip memory (on-chip memory, OCM), and the second memory is a dynamic random access memory (dynamic random-access memory, DRAM).

Through the technical solution, the sensitive information is stored in the OCM, or is encrypted and stored in the DRAM, and the non-sensitive information is stored in plaintext in the DRAM. The OCM is capable of resisting a physical attack such as a direct memory access (direct memory access, DMA) attack or a cold boot attack, so that an attacker cannot steal sensitive information in a memory through a physical attack method such as the DMA attack or the cold boot attack.

In some embodiments, the writing the application information into a first memory includes: obtaining remaining memory space of the first memory; when storage space required by the application information is greater than the remaining memory space of the first memory, encrypting first information in the first memory, and writing the encrypted first information into the second memory, where the first information is application information having the first attribute; releasing memory space that is of the first memory and that is occupied by the first information, so that the remaining memory space of the first memory is greater than or equal to the storage space required by the application information; and writing the application information into the first memory.

Through the technical solution, when the application information is written into the first memory, if the storage space required by the application information is greater than the remaining memory space of the first memory, partial information in the first memory is encrypted, swapped out, and stored into the second memory, and the memory space that is of the first memory and that is occupied by the swapped-out information is released. In this way, the remaining memory space of the first memory may be increased, to meet the storage space required by the application information and write the application information.

In some embodiments, the writing the application information into a first memory includes: obtaining remaining memory space of the first memory; when storage space required by the application information is greater than the remaining memory space of the first memory, encrypting the application information and writing the encrypted application information into the second memory; and when the storage space required by the application information is less than the remaining memory space of the first memory, writing the application information into the first memory.

Through the technical solution, when the application information is written into the first memory, if the storage space required by the application information is greater than the remaining memory space of the first memory, the application information may be encrypted and stored into the second memory. When the storage space required by the application information is less than the remaining memory space of the first memory, the application information may be directly written into the first memory.

In some embodiments, the information processing method further includes: obtaining a page table associated with the first information, where the page table records a correspondence between a first virtual address interval and a first physical address interval that are allocated to the first information; and removing the correspondence that is between the first virtual address interval and the first physical address interval and that is recorded in the page table, and establishing a correspondence between the first virtual address interval and a second physical address interval, where the first physical address interval is a physical address of the first memory, and the second physical address interval is a physical address of the second memory.

Through the technical solution, in a process of writing the encrypted first information into the second memory, a mapping relationship between a virtual memory address interval and a physical memory address interval that is in the page table and that corresponds to the first information is maintained, and a physical address of the first memory mapped to the first virtual address interval is modified into a physical address of the second memory, so that an upper-layer application is unaware of a swap-out storage operation of the first information, thereby implementing unified addressing of the first memory and the second memory. In addition, because an amount of information loaded to the first memory is greatly reduced (from information about an entire application to sensitive information of the application), a processing amount of information encryption and swapping is greatly reduced, and system execution costs are lower.

In some embodiments, the information processing method further includes: storing original permission of the first information into the page table associated with the first information.

Through the technical solution, the original permission of the first information is stored into a corresponding page table. For example, permission information is stored by using an unused field in the page table, thereby reducing memory usage overheads. In addition, the original permission stored in the page table may be used for permission recovery when the first information is subsequently decrypted and swapped into the first memory.

In some embodiments, the encrypting first information in the first memory includes: selecting the first information from the first memory by using a preset replacement algorithm, where the preset replacement algorithm includes one of a least frequently used algorithm, a least recently used algorithm, or a first-in-first-out algorithm; and encrypting the first information.

Through the technical solution, an algorithm such as the least frequently used algorithm, the least recently used algorithm, or the first-in-first-out algorithm may be used to select information that needs to be encrypted and swapped out, so that current selected information is temporarily unused information, and running efficiency of application software is not affected.

In some embodiments, the information processing method further includes: setting permission of the first information stored in the second memory to be inaccessible.

Through the technical solution, the permission of the encrypted and swapped-out first information is set to be inaccessible. When accessing the first information, a CPU may trigger an access permission fault interrupt, so that the first information may be subsequently triggered to be decrypted and swapped into the first memory based on the access permission fault interrupt.

In some embodiments, the information processing method further includes: decrypting the encrypted first information in response to an access request for the encrypted first information; writing the decrypted first information into the first memory; and releasing memory space that is of the second memory and that is occupied by the first information.

Through the technical solution, when accessing the first information stored in the second memory, the CPU may decrypt the encrypted first information and swap the encrypted first information into the first memory, so that the CPU can read the first information from the first memory. In addition, the memory space that is of the second memory and that is occupied by the first information is released in time, thereby improving use efficiency of the second memory.

In some embodiments, the writing the decrypted first information into the first memory includes: obtaining the remaining memory space of the first memory; when storage space required by the decrypted first information is greater than the remaining memory space of the first memory, encrypting partial information in the first memory, and writing the encrypted partial information into the second memory; releasing memory space that is of the first memory and that is occupied by the partial information, so that the remaining memory space of the first memory is greater than or equal to the storage space required by the decrypted first information; and writing the decrypted first information into the first memory.

Through the technical solution, when the decrypted first information is written into the first memory, if the storage space required by the first information is greater than the remaining memory space of the first memory, partial information in the first memory is encrypted, swapped out, and stored into the second memory, and the memory space that is of the first memory and that is occupied by the swapped-out information is released. In this way, the remaining memory space of the first memory may be increased, to meet the storage space required by the first information and write the first information. When the storage space required by the first information is less than the remaining memory space of the first memory, the first information may be directly written into the first memory.

In some embodiments, after the writing the decrypted first information into the first memory, the method includes: obtaining original permission of the first information from a page table associated with the first information; and restoring permission of the first information stored in the first memory from inaccessibility to the original permission of the first information.

Through the technical solution, after the decrypted first information is written into the first memory, the original permission of the first information may be obtained from the page table, so that permission recovery may be performed on the first information, and the permission of the first information read by the CPU from the first memory does not change.

In some embodiments, the writing the decrypted first information into the first memory includes: when the access request triggers an access permission fault interrupt, writing the decrypted first information into the first memory.

Through the technical solution, for information triggering the access permission fault interrupt, whether the information is sensitive information may be verified to determine whether there is a real access permission fault or the information is swapped in and stored into the first memory.

In some embodiments, the information processing method further includes: obtaining a page table associated with the application information, where the page table records a virtual address interval allocated to the application information, the virtual address interval includes several pages, and the page table includes several page table entries that are in one-to-one correspondence with the several pages; and configuring a page table entry belonging to the first attribute to be non-cacheable, where the page table entry includes a field used to mark an attribute.

Through the technical solution, a page table entry corresponding to the sensitive information is configured to be a cache (cache) disabling function, so that a cache is disabled by page, and an attacker can be prevented from stealing the sensitive information through a cache side-channel attack.

In some embodiments, after the encrypting the application information and writing the encrypted application information into a second memory, the method includes: decrypting the encrypted application information in response to an access request for the encrypted application information; writing the decrypted application information into the first memory; and releasing memory space that is of the second memory and that is occupied by the application information.

Through the technical solution, when accessing the application information stored in the second memory, the CPU may decrypt the encrypted application information and swap the encrypted application information into the first memory, so that the CPU can read the application information from the first memory. In addition, the memory space that is of the second memory and that is occupied by the application information is released in time, thereby improving use efficiency of the second memory.

In some embodiments, the writing the decrypted application information into the first memory includes: obtaining remaining memory space of the first memory; when storage space required by the decrypted application information is greater than the remaining memory space of the first memory, encrypting partial information in the first memory, and writing the encrypted partial information into the second memory; releasing memory space that is of the first memory and that is occupied by the partial information, so that the remaining memory space of the first memory is greater than or equal to the storage space required by the decrypted application information; and writing the decrypted application information into the first memory.

Through the technical solution, when the decrypted application information is written into the first memory, if the storage space required by the application information is greater than the remaining memory space of the first memory, partial information in the first memory is encrypted, swapped out, and stored into the second memory, and the memory space that is of the first memory and that is occupied by the swapped-out information is released. In this way, the remaining memory space of the first memory may be increased, to meet the storage space required by the application information and write the application information. When the storage space required by the application information is less than the remaining memory space of the first memory, the application information may be directly written into the first memory.

In some embodiments, the information processing method further includes: setting permission of the application information stored in the second memory to be inaccessible.

Through the technical solution, the permission of the application information stored in the second memory is set to be inaccessible. When accessing the application information, the CPU may trigger the access permission fault interrupt, so that the application information may be subsequently triggered to be decrypted and swapped into the first memory based on the access permission fault interrupt.

In some embodiments, after the writing the decrypted application information into the first memory, the method includes: obtaining original permission of the application information from a page table associated with the application information; and restoring permission of the application information stored in the first memory from inaccessibility to the original permission of the application information.

Through the technical solution, after the decrypted application information is written into the first memory, the original permission of the application information may be obtained from the page table, so that permission recovery may be performed on the application information, and the permission of the application information read by the CPU from the first memory does not change.

In some embodiments, the information processing method further includes: when the application information is information about a trusted application, configuring the first memory to be accessible by a trusted execution environment (trusted execution environment, TEE) but inaccessible by a rich execution environment (rich execution environment, REE).

Through the technical solution, when the application information is the information about the trusted application, security of the TEE can be enhanced by configuring the first memory to be accessible by the TEE but inaccessible by the REE.

In some embodiments, the information processing method further includes: dividing the first memory into a first storage area and a second storage area, where the first storage area is used to store application information whose attribute is the first attribute, and the second storage area is used to store a key used to encrypt and decrypt the application information and an initialization vector.

Through the technical solution, the key used to encrypt and decrypt the application information and a key offset are stored in first content, so that an attacker cannot steal, through a physical attack method such as a DMA attack or a cold boot attack, key information that is used to encrypt and decrypt the sensitive information and that is in the memory.

According to a second aspect, an embodiment of this application provides a computer-readable storage medium, including computer instructions. When the computer instructions are run on an electronic device, the electronic device is enabled to perform the information processing method described in the first aspect.

According to a third aspect, an embodiment of this application provides an electronic device. The electronic device includes a processor and a memory. The memory is configured to store instructions. The processor is configured to invoke the instructions in the memory, so that the electronic device is enabled to perform the information processing method according to the first aspect.

According to a fourth aspect, an embodiment of this application provides a computer program product. When the computer program product runs on a computer, the computer is enabled to perform the information processing method according to the first aspect.

According to a fifth aspect, an apparatus is provided. The apparatus has a function of implementing behaviors of an electronic device in the method according to the first aspect. The functions may be implemented by hardware, or may be implemented by hardware executing corresponding software. The hardware or software includes one or more modules corresponding to the foregoing functions.

It may be understood that the computer-readable storage medium provided in the second aspect, the electronic device provided in the third aspect, the computer program product provided in the fourth aspect, and the apparatus provided in the fifth aspect all correspond to the method in the first aspect. Therefore, for beneficial effects that can be achieved by the computer-readable storage medium, the electronic device, the computer program product, and the apparatus, reference may be made to the beneficial effects in the corresponding method provided above. Details are not described herein again.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram of an application scenario of an information processing method according to an embodiment of this application;
FIG. 4 is a diagram of an architecture of implementing memory information encryption by an electronic device according to an embodiment of this application;
FIG. 5a and FIG. 5b are schematic flowcharts of system initialization for implementing memory information encryption by an electronic device according to an embodiment of this application;
FIG. 6a and FIG. 6b are schematic flowcharts of memory allocation for implementing memory information encryption by an electronic device according to an embodiment of this application;
FIG. 7a and FIG. 7b are schematic flowcharts of accessing encrypted information for implementing memory information encryption by an electronic device according to an embodiment of this application;
FIG. 8 is a diagram of memory space division of a first memory according to an embodiment of this application;
FIG. 9 is a diagram of content included in a page table entry according to an embodiment of this application; and
FIG. 10 is a schematic flowchart of an information processing method according to an embodiment of this application.

### DESCRIPTION OF EMBODIMENTS

It should be noted that "at least one" means one or more, and "a plurality of" means two or more in this application. The term "and/or" describes an association relationship for describing associated objects and represents that three relationships may exist. For example, A and/or B may represent the following three cases: Only A exists, both A and B exist, and only B exists, where A and B may be singular or plural. In the specification, claims, and accompanying drawings of this application, the terms "first", "second", "third", "fourth", and the like (if any) are intended to distinguish between similar objects but do not necessarily indicate a specific order or sequence.

In embodiments of this application, the word such as "example" or "for example" is used to represent giving an example, an illustration, or a description. Any embodiment or design described by "example" or "for example" in embodiments of this application should not be construed as being more preferred or advantageous than other embodiments or designs. To be precise, the terms such as "example" or "for example" are intended to present a related concept in a specific manner.

For ease of understanding, some concepts related to embodiments of this application are described as examples for reference.

An operating system (Operating System, OS) is a program that manages computer hardware and software resources, and is cornerstone of a computer system.

A kernel establishes a platform for communication between computer software and hardware. The kernel provides system services, such as file management, virtual memory, and device input/output (Input/Output, I/O).

Memory mapping involves mapping a virtual memory address to a physical memory address. The kernel can maintain one page table (page table) for each process. The page table records a mapping relationship between the virtual memory address and the physical memory address. When the virtual memory address accessed by the process cannot be found in the page table, the operating system may generate one page fault, enter kernel space to allocate a physical memory and update the page table of the process, and finally return to user space (user space) to resume running of the process.

User space, also referred to as a user mode, is activity space of an upper-layer application. Execution of the application needs to depend on a resource provided by the kernel, for example, a central processing unit (central processing unit, CPU) resource, a storage resource, or an I/O resource.

Kernel space, also referred to as a kernel mode, is used to control a hardware resource of a computer and provide an environment for running the upper-layer application.

To provide rich functions and extensible attributes of an electronic device, the electronic device is usually built on a rich execution environment (rich execution environment, REE) that provides an open operating environment. The REE, also referred to as a general operating environment, mainly includes a rich operating system (rich operating system, Rich OS) running on a general-purpose processor, or referred to as an REE operating system, and a client application (client application, CA) running on the REE operating system. To protect user privacy and information security, the global platform organization proposes a trusted execution environment (trusted execution environment, TEE) standard. The TEE is an independent running environment running outside the REE, and mainly includes a trusted operating system (trusted operating system, Trusted OS), or referred to as a TEE operating system, and one or more trusted applications (trusted application, TA) running on the TEE operating system. The TEE is isolated from the REE. The REE cannot directly access hardware and software resources of the TEE.

The electronic device may communicate with another electronic device or server by using a communication network. The electronic device in this application may be a communication device, for example, may be a server or a terminal device. The terminal device may include at least one of the following: a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and a smart city device. A specific type of the electronic device is not specially limited in embodiments of this application. The communication network may be a wired network, or may be a wireless network. For example, the communication network may be a local area network (local area network, LAN), or may be a wide area network (wide area network, WAN), for example, the Internet. When the communication network is the local area network, the communication network may be, for example, a near-distance communication network such as a wireless fidelity (wireless fidelity, Wi-Fi) hotspot network, a Wi-Fi P2P network, a Bluetooth network, a ZigBee network, or a near field communication (near field communication, NFC) network. When the communication network is the wide area network, the communication network may be, for example, a third generation mobile communication technology (3rd generation wireless telephone technology, 3G) network, a fourth generation mobile communication technology (4th-generation mobile communication technology, 4G) network, a fifth generation mobile communication technology (5th-generation mobile communication technology, 5G) network, a future evolved public land mobile network (public land mobile network, PLMN), or the Internet.

In some embodiments, one or more apps may be installed on the electronic device. The app may be referred to as an application for short, and is a software program that can implement one or more specific functions, for example, an instant messaging application, a video application, an audio application, an image shooting application, and a cloud desktop application. The instant messaging application may include, for example, a messaging application, WeChat^{®} (WeChat^{®}), WhatsApp Messenger^{®}, LINE^{®} (Line^{®}), Instagram^{®} (instagram^{®}), Kakao Talk^{®}, and DingTalk^{®}. The image shooting application may include, for example, a camera application (a system camera or a third-party camera application). The video application may include, for example, YouTube^{®}, Twitter^{®}, TikTok^{®}, iQIYI^{®}, and Tencent Video^{®}. The audio application may include, for example, KuGou^{®}, XiaMi Music^{®}, and QQ Music^{®}. An application mentioned in the following embodiments may be a system application installed when the electronic device is delivered from the factory, or may be a third-party application downloaded by a user from a network or obtained by the user from another electronic device during use of the electronic device.

The electronic device includes but is not limited to carrying iOS^{®}, Android^{®} (Android^{®}), Windows Mobile^{®}, HarmonyOS^{®}, or another operating system.

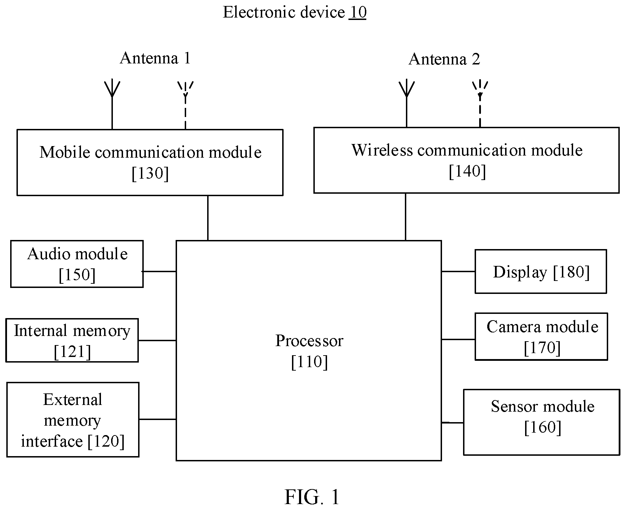

FIG. 1 is a diagram of a structure of an electronic device 10.

The electronic device 10 may include a processor 110, an external memory interface 120, an internal memory 121, an antenna 1, an antenna 2, a mobile communication module 130, a wireless communication module 140, an audio module 150, a sensor module 160, a camera module 170, a display 180, and the like.

It may be understood that the structure shown in this embodiment of this application does not constitute a specific limitation on the electronic device 10. In some other embodiments of this application, the electronic device 10 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 may be a cache. The memory may store instructions or data used or frequently used by the processor 110. If the processor 110 needs to use the instructions or the data, the instructions or the data may be directly invoked from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module such as an audio module, a wireless communication module, a display, and a camera through at least one of the foregoing interfaces.

It can be understood that an interface connection relationship between modules illustrated in this embodiment of this application is merely an illustrative description, and does not constitute a limitation on the structure of the electronic device 10. In some other embodiments of this application, the electronic device 10 may alternatively use an interface connection manner different from that in the foregoing embodiment, or use a combination of a plurality of interface connection manners.

A wireless communication function of the electronic device 10 may be implemented through the antenna 1, the antenna 2, the mobile communication module 130, the wireless communication module 140, the modem processor, the baseband processor, and the like.

The antenna 1 and the antenna 2 are configured to transmit and receive an electromagnetic wave signal. Each antenna in the electronic device 10 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 130 may provide a wireless communication solution that is applied to the electronic device 10 and that includes 2G, 3G, 4G, 5G, and the like. The mobile communication module 130 may include at least one filter, switch, power amplifier, low noise amplifier, and the like. The mobile communication module 130 may receive an electromagnetic wave through the antenna 1, perform processing such as filtering or amplification on the received electromagnetic wave, and transmit the electromagnetic wave to the modem processor for demodulation. The mobile communication module 130 may further amplify a signal modulated by the modem processor, and convert the signal into an electromagnetic wave for radiation through the antenna 1. In some embodiments, at least some functional modules of the mobile communication module 130 may be disposed in the processor 110. In some embodiments, at least some functional modules of the mobile communication module 130 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through the audio module, or displays an image or a video through the display 180. In some embodiments, the modem processor may be an independent component. In some other embodiments, the modem processor may be independent of the processor 110, and is disposed in a same device as the mobile communication module 130 or another functional module.

The wireless communication module 140 may provide a wireless communication solution that is applied to the electronic device 10 and that includes a wireless local area network (wireless local area networks, WLAN), Bluetooth (Bluetooth, BT), Bluetooth low energy (Bluetooth low energy, BLE), ultra wide band (ultra wide band, UWB), a global navigation satellite system (global navigation satellite system, GNSS), frequency modulation (frequency modulation, FM), NFC, an infrared (infrared, IR) technology, and the like. The wireless communication module 140 may be one or more components integrating at least one communication processing module. The wireless communication module 140 receives an electromagnetic wave through the antenna 2, performs frequency modulation and filtering processing on an electromagnetic wave signal, and sends a processed signal to the processor 110. The wireless communication module 140 may further receive a to-be-sent signal from the processor 110, perform frequency modulation and amplification on the signal, and convert the signal into an electromagnetic wave for radiation through the antenna 2.

In some embodiments, in the electronic device 10, the antenna 1 and the mobile communication module 130 are coupled, and the antenna 2 and the wireless communication module 140 are coupled, so that the electronic device 10 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 10 may implement a display function via the GPU, the display 180, the application processor, and the like. The GPU is a microprocessor for image processing, and is connected to the display 180 and the application processor. The GPU is configured to perform mathematical and geometric computation, and render an image. The processor 110 may include one or more GPUs, which execute program instructions to generate or change display information.

The sensor module may include a touch sensor, a pressure sensor, a fingerprint sensor, and the like. The camera module 170 includes a camera. The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 10 may include one or more displays 180.

The electronic device 10 may implement a photographing function through the camera module 170, the ISP, the video codec, the GPU, the display 180, the application processor AP, the neural-network processing unit NPU, and the like.

The digital signal processor is configured to process a digital signal, and may further process another digital signal. For example, when the electronic device 10 selects a frequency, the digital signal processor is configured to perform Fourier transform and the like on frequency energy.

The video codec is configured to compress or decompress a digital video. The electronic device 10 may support one or more types of video codecs. In this way, the electronic device 10 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self learning. Applications such as intelligent cognition of the electronic device 10, for example, image recognition, facial recognition, speech recognition, and text understanding, may be implemented through the NPU.

The external memory interface 120 may be configured to connect to an external memory card, for example, a micro SD card, to extend a storage capability of the electronic device 10. The external memory card communicates with the processor 110 through the external memory interface 120, to implement a data storage function. For example, files such as music and videos are stored in the external memory card, or files such as music and videos are transmitted from the electronic device to the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 10. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function methods or data processing of the electronic device 10 by running the instructions stored in the internal memory 121 and/or instructions stored in a memory provided in the processor.

The audio module 150 is configured to convert digital audio information into an analog audio signal for output, and is also configured to convert an analog audio input into a digital audio signal. The audio module 150 may be further configured to encode and decode an audio signal. In some embodiments, the audio module 150 may be disposed in the processor 110, or some functional modules in the audio module 150 are disposed in the processor 110.

A software system of the electronic device 10 may use a layered architecture, an event-driven architecture, a microkernel architecture, a micro service architecture, or a cloud architecture. In this embodiment of this application, an Android system with a layered architecture is used as an example to describe a software structure of the electronic device 10.

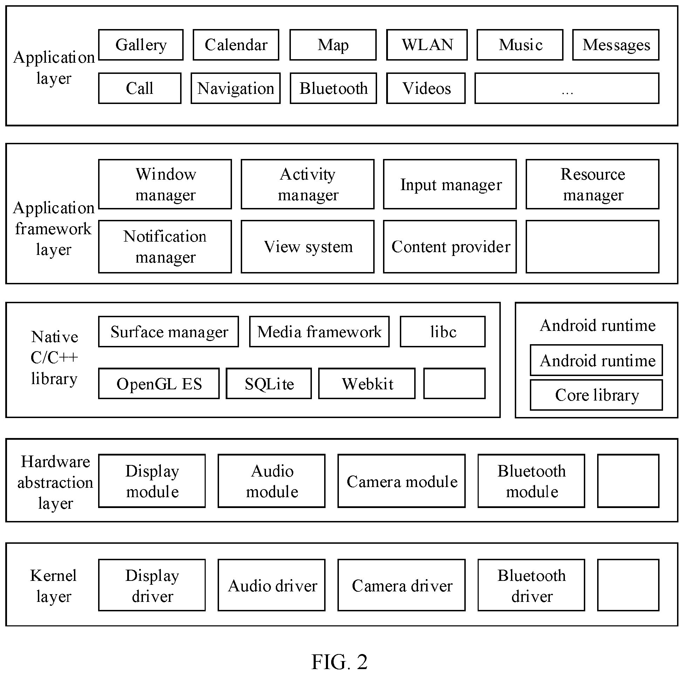

FIG. 2 is a block diagram of a software structure of an electronic device 10 according to an embodiment of this application.

The layered architecture divides software into several layers, and each layer has a clear role and responsibility. The layers communicate with each other through a software interface. In some embodiments, the Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 2, the application packages may include applications such as Camera, Gallery, Calendar, Call, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (Window Manager Service, WMS). The WMS may be used for window management, window animation management, surface management, and as a transit station for an input system.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying a picture. The view system may be used to construct an application. A display interface may include one or more views. For example, a display interface including a message notification icon may include a view for displaying text and a view for displaying a picture.

The resource manager provides an application with various resources, such as a localized character string, an icon, a picture, a layout file, and a video file.

The notification manager enables an application to display notification information in a status bar, and may be used to convey a notification-type message. The displayed notification information may automatically disappear after a short pause without user interaction. For example, the notification manager is used to notify download completion, provide a message notification, and the like. The notification manager may alternatively be a notification that appears in a top status bar of the system in a form of a graph or scroll bar text, for example, a notification of an application that is run in the background, or may be a notification that appears on the screen in a form of a dialog window. For example, text information is displayed in the status bar, an announcement is given, the electronic device vibrates, or the indicator light blinks.

The activity manager may provide an activity manager service (Activity Manager Service, AMS). The AMS may be used to start, switch, and schedule system components (for example, activities, services, content providers, and broadcast receivers), and manage and schedule application processes.

The input manager may provide an input manager service (Input Manager Service, IMS). The IMS may be used for system input management, for example, a touchscreen input, a key input, and a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead-of-time (ahead of time, AOT) compilation technology and a just-in-time (just in time, JIT) compilation technology.

The core library is mainly used to provide functions of basic Java libraries, such as a basic data structure library, a mathematics library, an I/O library, a tool library, a database, and a network library. The core library provides the API for the user to develop an Android application.

The native C/C++ library may include a plurality of functional modules, such as a surface manager (surface manager), a media framework (Media Framework), libc, OpenGL ES, SQLite, and Webkit.

The surface manager is used to manage a display subsystem and provide fusion of 2D and 3D layers for a plurality of applications. The media framework supports playback and recording of audio and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 10.

The hardware abstraction layer runs in user space (user space), encapsulates a kernel layer driver, and provides an invoke interface for an upper layer.

The kernel layer is a layer between hardware and software. The kernel layer includes at least a display driver, a camera driver, an audio driver, and a sensor driver.

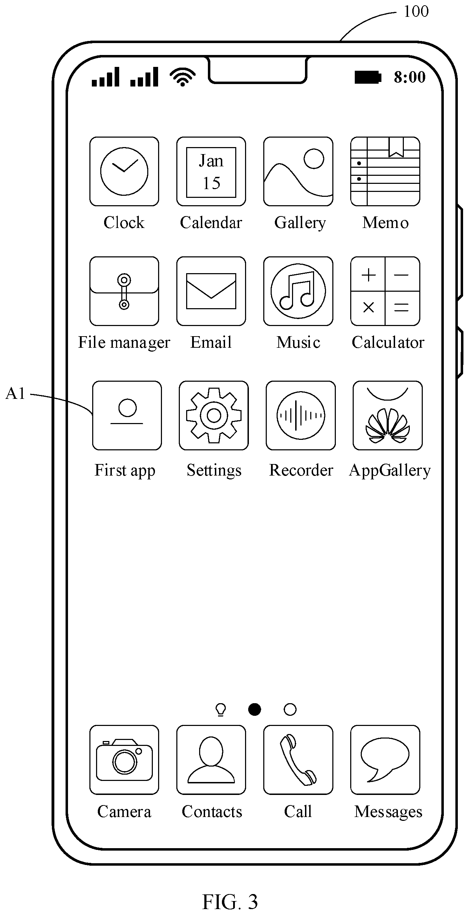

With reference to FIG. 3, the following describes an example of a diagram of an application scenario of an information processing method according to an embodiment of the present invention.

An operating system and application software may be installed on the electronic device 10. The application software may be software that provides a service or is oriented to a user, or the application software may be another type of software. This is not limited in this application. For example, the electronic device 10 is a server, and the application software may be service software installed on the server. The electronic device 10 is a mobile phone, and the application software may be an app installed on the mobile phone.

FIG. 3 is described by using an example in which the electronic device 10 is a mobile phone. A first app A1 is installed on the electronic device 10, and the first app A1 may be an instant messaging app, a video app, an audio app, or the like. The electronic device 10 may automatically start the first app A1 or start the first app A1 in response to an operation instruction of the user. The operating system may create a process P1 for the first app A1, and the process P1 is a running instance of the first app A1. The process P1 may apply to the operating system for a virtual memory, and a memory management unit (Memory Manager, MM) of the operating system may map a virtual memory address of the virtual memory to a physical memory address of a physical memory, so that application information of the first app A1 is subsequently written into the memory, to implement running of the first app A1 on the electronic device 10. The MM may be integrated into the processor 110. The application information of the first app A1 may be information that is loaded to the memory to run the first app A1 on the electronic device 10.

For example, a processor of the electronic device 10 is a CPU, and a memory is storage space that the CPU can directly address. For the electronic device 10, the memory usually includes an on-chip memory and a system memory. The system memory has a large capacity, and is usually a dynamic random access memory (dynamic random-access memory, DRAM). For example, a memory module on a computer main board or a server main board is the system memory, and is disposed independently of the CPU. An attacker may steal application information in the system memory through a physical attack method such as an interface/bus monitoring attack, a direct memory access (direct memory access, DMA) attack, or a cold boot attack. The application information may include application content data, application cache data, application configuration data, application code, application resources, and the like. The on-chip memory is usually an on-chip memory (on-chip memory, OCM) of the CPU. The on-chip memory has a small capacity and is usually a static random access memory (static random-access memory, SRAM). Because the on-chip memory is integrated in the CPU, the on-chip memory may resist physical attacks such as the interface/bus monitoring attack, the direct memory access (direct memory access, DMA) attack, and the cold boot attack.

In some embodiments, an application developer may perform sensitivity classification on the application information of the first app A1 according to an actual requirement. The application information may be classified into two types and marked differently. One type is sensitive information that needs to be protected, and the other type is non-sensitive information that does not need to be protected. For example, a key, a token, and a whitelist associated with the first app A1, user privacy data, core code of the first app A1, or the like may be classified as the sensitive information, and other data may be classified as the non-sensitive information. The sensitive information may be encrypted by using a preset encryption algorithm, and the sensitive information is written into the system memory in ciphertext, or the sensitive information is written into the on-chip memory in plaintext, and the non-sensitive information is written into the system memory in plaintext. In this way, the memory read/write security of the sensitive information may be improved by resisting the interface/bus listening attack, the direct memory access (direct memory access, DMA) attack, the cold boot attack, and a RowHammer attack without affecting CPU access to memory information.

In some embodiments, when a memory is applied for the sensitive information, the on-chip memory may be preferentially allocated to the sensitive information. If the on-chip memory applied for at a time is too large, and remaining memory space of the on-chip memory cannot meet a writing requirement of the sensitive information, the sensitive information may be encrypted first, and the sensitive information is written into the system memory in ciphertext. When the sensitive information is accessed by the CPU, the sensitive information is decrypted and swapped into the on-chip memory through a replacement process, so that the CPU can access sensitive information plaintext stored in on-chip memory. The replacement process may include a swap-in sub-process and a swap-out sub-process. The swap-out sub-process may refer to encrypting sensitive information plaintext on the on-chip memory, writing the encrypted sensitive information ciphertext into the system memory, and releasing on-chip memory space occupied by the sensitive information plaintext. The swap-in sub-process may refer to decrypting sensitive information ciphertext in the system memory, writing the decrypted sensitive information plaintext into the on-chip memory, and releasing system memory space occupied by the sensitive information ciphertext.

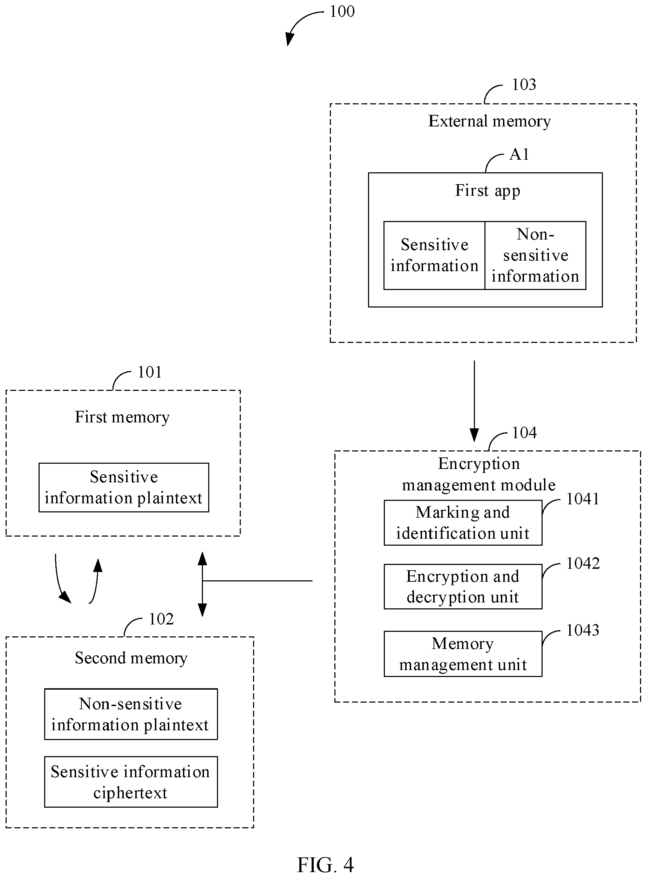

With reference to FIG. 4, the following describes an example of a diagram of an architecture of implementing memory information encryption by an electronic device according to an embodiment of the present invention.

For example, an electronic device 10 may include an on-chip memory (a first memory 101 shown in FIG. 4), a system memory (a second memory 102 shown in FIG. 4), an external memory 103, and an encryption management module 104. The first memory 101 may be integrated into a CPU, and a capacity of the first memory 101 is usually at an MB level. The second memory 102 is disposed independently of the CPU, and a capacity of the second memory 102 is usually at a GB level. The external memory 103 may be a hard disk memory, a mobile memory, or the like. The external memory 103 usually uses a flash chip as a storage medium. Compared with the external memory 103, the first memory 101 and the second memory 102 are faster in reading and writing. For the electronic device 10, when the CPU needs to invoke information, the CPU usually first transmits information stored in the external memory 103 to a memory (the first memory 101 or the second memory 102), and then the CPU invokes the information from the memory. Because a read/write speed of the memory is usually far higher than a read/write speed of the external memory 103, waiting time of the CPU may be reduced.

The encryption management module 104 may be implemented in a form of hardware, or may be implemented in a form of a software functional unit, or may be implemented in a form of a combination of software and hardware. For example, the encryption management module 104 may be a part of the CPU. The following uses an example in which a first app A1 is installed on the electronic device 10 for description.

An application developer performs sensitivity classification on application information of the first app A1 according to an actual requirement. For example, sensitive information that needs to be protected is set as a first attribute, and non-sensitive information that does not need to be protected is set as a second attribute. This application does not limit a sensitivity classification manner of the application information. Sensitivity classification may be implemented by using a source code level identifier or a configuration file type, or may be implemented by using specified data, code, a variable, a file, or the like as a sensitivity classification identifier. An existing application development tool may be extended, so that the application development tool provides the application developer with a function of identifying the sensitive information, and sensitivity classification may be performed on the application information of the first app A1 by using the application development tool. For example, a developer may use a form of a tag such as a section name to perform sensitivity classification on the application information.

The electronic device 10 starts the first app A1, and the application information associated with the first app A1 may be loaded to the memory, to run the first app A1 on the electronic device 10. The application information may be data and/or code stored in the external memory 103, or may be some data that is instantly input by using an input device.

In some embodiments, the electronic device 10 starts the first app A1, and an operating system may create a process P1 and a page table P1 corresponding to the process P1 for the first app A1. The process P1 is a running instance of the first app A1. The page table P1 is used to provide mapping from a virtual memory page to a physical memory page. The page table P1 may include a plurality of page table entries, and each page table entry may include a page frame number and some flag bits. Virtual memory address space allocated by the operating system to the process P1 may be divided into a plurality of virtual memory pages of a fixed size. For the memory, physical memory address space may also be divided into a plurality of physical memory pages of a fixed size. The page frame number is used to record a specific physical memory page corresponding to a virtual memory page. The flag bit may include a valid bit, a protection bit, a modified bit, and the like. The valid bit is used to identify whether a virtual memory page corresponding to the page table entry is read into the memory, the protection bit is used to identify read/write permission of the virtual memory page, and the modified bit is used to identify a modification record of the virtual memory page in the memory, to indicate whether the virtual memory page is modified.

In some embodiments, an unused field in a page table entry may be used as a sensitivity mark. That is, some virtual memory pages are marked as sensitive memory pages, so that sensitive information in application information is marked in the page table. For example, a sensitive mark field in a page table entry is configured, so that some virtual memory pages recorded in a page table are classified as sensitive memory pages, and other virtual memory pages are classified as non-sensitive memory pages. The sensitive memory pages correspond to sensitive information, and the non-sensitive memory pages correspond to non-sensitive information.

In some embodiments, the encryption management module 104 may include a marking and identification unit 1041, an encryption and decryption unit 1042, and a memory management unit 1043. The marking and identification unit 1041 may be configured to implement marking and identification of sensitive information and non-sensitive information. For example, the marking and identification unit 1041 may identify an identifier reserved in the application information by the application developer in a development phase.

For example, the application developer identifies an attribute of the application information by using a section name, a segment name, or the like. The following uses an example in which the section name is used as an attribute identifier of the application information for description. The marking and identification unit 1041 may determine whether the application information is sensitive information or non-sensitive information by identifying the section name. When it is identified that a memory is applied for the sensitive information, the operating system may preferentially allocate the first memory 101 to the sensitive information. When it is identified that a memory is applied for the non-sensitive information, the operating system may allocate the second memory 102 to the non-sensitive information. If a memory applied for the sensitive information is too large, and remaining memory space of the first memory 101 cannot meet a writing requirement of the sensitive information, the sensitive information may be encrypted first, and the sensitive information is written into the second memory 102 in ciphertext. When the sensitive information is accessed by the CPU, the sensitive information is decrypted and swapped into the first memory 101 through a replacement process.

The memory management unit 1043 is configured to manage the first memory 101, including but not limited to physical memory management, support for a corresponding page table operation, and support for virtual memory management. When the remaining memory space of the first memory 101 cannot satisfy memory application for the sensitive information, the memory management unit 1043 may further encrypt and swap out some sensitive information SC1 that is temporarily not used in the first memory 101 to the second memory 102, and release memory space that is of the first memory 101 and that is occupied by the sensitive information SC1, thereby increasing the remaining memory space of the first memory 101. When sensitive information ciphertext SC2 in the second memory 102 is accessed by the CPU, the memory management unit 1043 may further decrypt and swap the sensitive information ciphertext SC2 into the first memory 101, and release memory space that is of the second memory 102 and that is occupied by the sensitive information SC2.

In some embodiments, an existing memory management function of the electronic device 10 may be extended, to manage the first memory 101 as an independent memory pool. In this way, memory space allocation and memory space release may be performed on the first memory 101, a large memory block may be split into small memory blocks by using a split operation, a small memory block may be combined by using a merge operation, and the like.

In some embodiments, when the marking and identification unit 1041 identifies that the application information is the sensitive information, the memory management unit 1043 may allocate the first memory 101 for the sensitive information, or allocate the second memory 102 for encrypted sensitive information. When the marking and identification unit 1041 identifies that the application information is the non-sensitive information, the memory management unit 1043 may allocate the second memory 102 for the non-sensitive information.

In some embodiments, when allocating memories for the sensitive information and the non-sensitive information, the memory management unit 1043 may add a sensitive information tag and a non-sensitive information tag to a page table. For example, a sensitive information mark field in a page table entry is configured, so that some virtual memory pages recorded in a page table may be classified as sensitive memory pages, and the sensitive memory pages correspond to the sensitive information. Other virtual memory pages are classified as non-sensitive memory pages, and the non-sensitive memory pages correspond to the non-sensitive information.

In some embodiments, to cope with a cache side-channel attack, a cache function may be further disabled in a page table entry, and the sensitive memory page is configured as non-cache (cache disabled), to disable a cache function of the sensitive information. When the CPU reads the sensitive information subsequently, the sensitive information is not cached, so that it is difficult for an attacker to steal the sensitive information from a cache.

In some embodiments, in a process of swap-in and swap-out of the sensitive information between the first memory 101 and the second memory 102, the memory management unit 1043 performs information swap-in and swap-out at a granularity of a page, and may perform operations such as saving, restoring, and resetting permission of the sensitive information. The permission of the sensitive information may include read permission, write permission, execution permission, and the like. For example, the sensitive information stored in the external memory 103 has permission a1, and the permission a1 is readable, unwritable, and non-executable. When the CPU writes the sensitive information stored in the external memory 103 into the first memory 101, the sensitive information stored in the first memory 101 also has the permission a1. When the sensitive information needs to be swapped out to the second memory 102, the sensitive information may be encrypted first, and then the encrypted sensitive information is written into the second memory 102. Permission of the sensitive information stored in the second memory 102 is set to permission a2. The permission a2 is inaccessible, and the original permission a1 may be stored in a page table. When the encrypted sensitive information stored in the second memory 102 is accessed by the CPU, the encrypted sensitive information may be decrypted first, and then the decrypted sensitive information is written into the first memory 101. The memory management unit 1043 may obtain the original permission a1 of the sensitive information from the page table, to restore permission of the sensitive information stored in the first memory 101 to the permission a1.

In some embodiments, the permission of the sensitive information stored in the second memory 102 is set to the permission a2. Because the permission a2 is inaccessible, accessing the sensitive information by the CPU triggers an access permission fault (permission fault) interrupt. In an interrupt handling process, whether the current permission fault interrupt is a decryption and swap-in request may be determined based on a sensitive memory page tag recorded in the page table. When it is determined that the current permission fault interrupt is the decryption and swap-in request, the encrypted sensitive information stored in the second memory 102 may be decrypted, and then the decrypted sensitive information is written into the first memory 101. The original permission of the sensitive information is restored at the same time.

In some embodiments, whether the information triggering the current permission fault interrupt is stored in the first memory 101 may be further determined. When the information is not stored in the first memory 101, and the page table records a sensitive memory page tag corresponding to the information, it may be determined that the current permission fault interrupt is a decryption and swap-in request.

In some embodiments, the memory management unit 1043 may maintain usage information of a current physical memory page of the first memory 101. In this way, when the remaining memory space of the first memory 101 is insufficient, a preset replacement algorithm may be used to select proper content to perform a swap-out operation, to increase the remaining memory space of the first memory 101. The preset replacement algorithm may include a least frequently used algorithm, a least recently used algorithm, a first-in-first-out algorithm, and the like.

The encryption and decryption unit 1042 is configured to provide an encryption and decryption service when the sensitive information is swapped in and swapped out between the first memory 101 and the second memory 102, and ensure integrity of encrypted content, to avoid being tampered by an attacker. For example, the encryption and decryption unit 1042 may encrypt and decrypt the sensitive information by using an Advanced Encryption Standard (advanced encryption standard, AES)-Galois/Counter Mode (galois counter mode, GCM) algorithm. The encryption and decryption unit 1042 may maintain a key (KEY) related to an encryption and decryption algorithm, an initialization vector (IV), and information related to integrity check. For example, the information related to integrity check may include additional authenticated data (additional authenticated data, AAD), a tag (TAG), and the like. The KEY and the IV may be generated by using a random number generator. For example, a hardware random number engine is used to generate the KEY and the IV.

In some embodiments, a parameter, such as the KEY and the IV, that requires a same level of security protection as the key according to a cryptographic algorithm requirement may also be stored in the first memory, and other non-sensitive information may be stored in the second memory 102. For example, information related to integrity check may be stored in the second memory 102. When the memory management unit 1043 swaps out a physical memory page in the first memory 101, the encryption and decryption unit 1042 may obtain information such as a KEY and an IV that correspond to the physical memory page, to encrypt content of the physical memory page, thereby swapping out the content and storing the content into the second memory 102. When the memory management unit 1043 swaps in a physical memory page in the second memory 102, the encryption and decryption unit 1042 may obtain information such as a KEY and an IV that correspond to the physical memory page, to decrypt ciphertext content of the physical memory page, thereby swapping in the ciphertext content and storing the ciphertext content into the first memory 101.

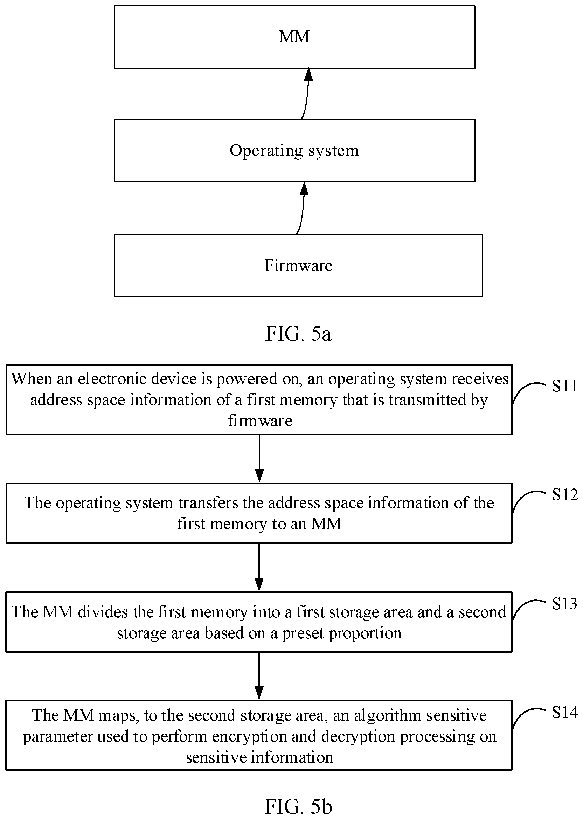

With reference to FIG. 5a to FIG. 7b, the following describes an example of a schematic flowchart of implementing memory information encryption by an electronic device according to an embodiment of the present invention.

In this embodiment, an operating system and a first app A1 are installed on an electronic device 10, and memory information encryption implemented by the electronic device 10 may include three sub-processes: a system initialization process, a memory allocation process, and an encrypted-information access process.

As shown in FIG. 5a, in a system initialization process, an operating system receives address space information of a first memory 101 transmitted by firmware, and transfers the address space information to an MM, so that the MM can manage the first memory 101. In the system initialization process, information such as a KEY and an IV used to encrypt and decrypt sensitive information may implement mapping between an allocated virtual memory address and a physical memory address of the first memory 101 by using the MM.

As shown in FIG. 5b, the system initialization process may specifically include the following steps.

S11: When the electronic device 10 is powered on, the operating system receives the address space information of the first memory 101 that is transmitted by the firmware.

In some embodiments, the firmware may be a basic input/output system (basic input output system, BIOS). When application information is information about a trusted application, the first memory 101 may be further configured to be accessible by a trusted execution environment (trusted execution environment, TEE) and inaccessible by a rich execution environment (rich execution environment, REE), so that the first memory 101 can resist a malicious attack that occurs on the REE side.

S12: The operating system transfers the address space information of the first memory 101 to the MM.

S13: The MM divides the first memory 101 into a first storage area and a second storage area based on a preset proportion.

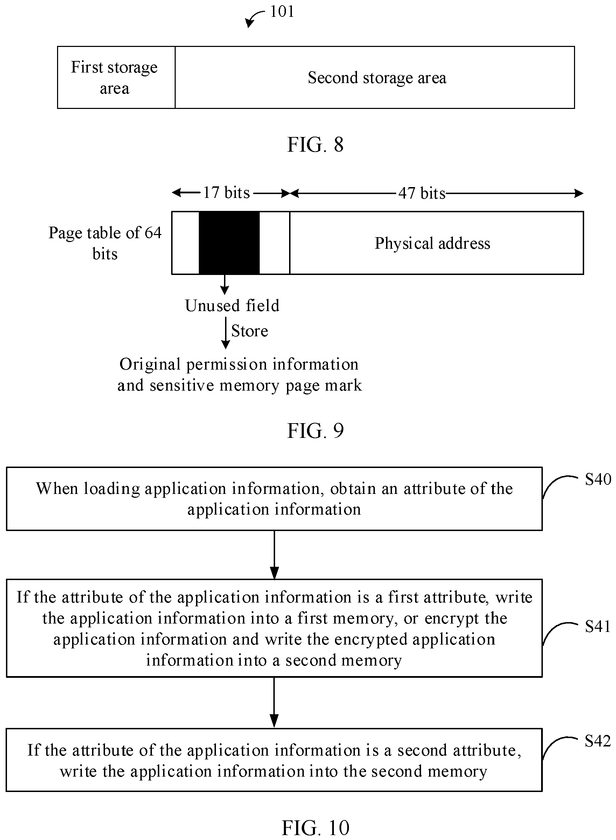

In some embodiments, the preset proportion may be set according to an actual requirement. This is not limited in this application. For example, a proportion of a storage space size of the first storage area to a storage space size of the second storage area is 20:1. As shown in FIG. 8, the MM divides the first memory 101 into a first storage area SA1 and a second storage area SA2. The first storage area SA1 is used to store sensitive information, and the second storage area SA2 is used to store a KEY, an IV, and the like used to encrypt and decrypt the sensitive information.

In some embodiments, the MM may further create a memory pool based on the first storage area SA1 for management, to perform operations such as memory space allocation and memory space release on the first storage area SA1.

S14: The MM maps, to the second storage area SA2, an algorithm sensitive parameter used to perform encryption and decryption processing on the sensitive information.

In some embodiments, the algorithm sensitive parameter may refer to a parameter, such as the KEY and the IV, that is used to encrypt and decrypt the sensitive information and that requires a same level of security protection as the key according to a cryptographic algorithm requirement. When the operating system allocates a virtual memory address to the algorithm sensitive parameter, the MM may establish mapping between the virtual memory address and a physical memory address of the second storage area SA2. In this way, the algorithm sensitive parameter such as the KEY and the IV can be written into the second storage area SA2, and an attacker cannot steal the algorithm sensitive parameter such as the KEY and the IV through a physical attack method such as a DMA attack or a cold boot attack.

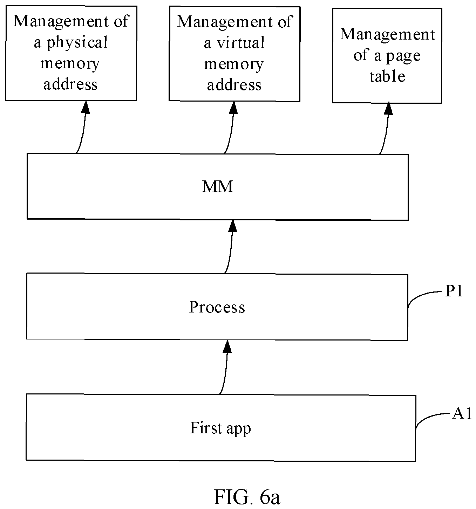

As shown in FIG. 6a, in a memory allocation process, the operating system may create a process P1 for the first app A1, and the process P1 may choose to apply to the MM for allocating the first memory 101 or the second memory 102 based on whether application information of the first app A1 is sensitive information or non-sensitive information. In the memory allocation process, the MM may implement management of a physical memory address, management of a virtual memory address, management of a page table, and the like.

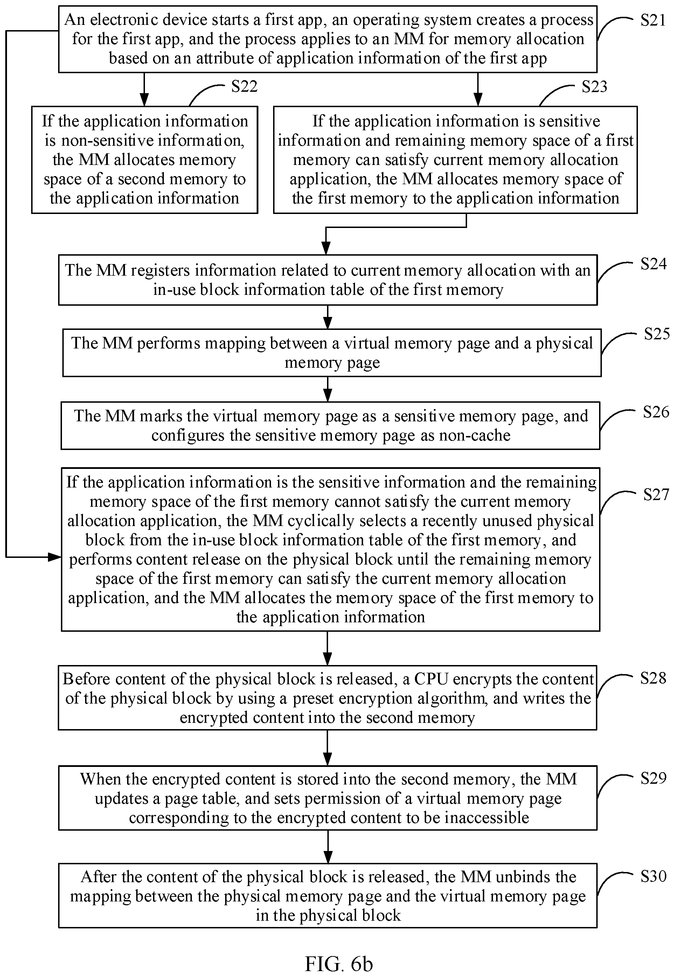

As shown in FIG. 6b, the memory allocation process may specifically include the following steps.

S21: The electronic device 10 starts the first app A1, the operating system creates the process P1 for the first app A1, and the process P1 applies to the MM for memory allocation based on an attribute of the application information of the first app A1.

In some embodiments, the attribute of the application information may be identified by using a section name of the application information, and whether the application information is the sensitive information or the non-sensitive information may be determined based on the section name of the application information. When it is determined that the application information is the sensitive information, the process P1 may apply to the MM for allocating memory space of the first memory 101, or apply to allocate memory space of the second memory 102. The following uses an example in which the application information is the sensitive information and the process P1 applies to the MM for allocating the memory space of the first memory 101 for description. When applying for allocating the memory space of the second memory 102, the application information needs to be encrypted, and is stored in the second memory 102 in a ciphertext form. When it is determined that the application information is the non-sensitive information, the process P1 may apply to the MM for allocating the memory space of the second memory 102.

In some embodiments, because the memory space of the second memory 102 is large, a problem that memory allocation cannot be performed due to insufficient remaining memory space usually does not occur. If the process P1 applies to the MM for allocating the memory space of the second memory 102, the MM may respond to a memory allocation application of the process P1, and allocate the memory space of the second memory 102 to the application information. Relatively speaking, because the memory space of the first memory 101 is small, a problem that memory allocation cannot be performed due to insufficient remaining memory space may occur.

When remaining memory space of the second memory 102 is insufficient, an existing mechanism may be used to resolve the problem. For example, partial information in the second memory 102 may be written into a hard disk, and memory space that is of the second memory 102 and that is occupied by the partial information is released, thereby increasing the remaining memory space of the second memory 102.

S22: If the application information is the non-sensitive information, the MM allocates the memory space of the second memory 102 to the application information.

In some embodiments, if the MM cannot allocate the memory space of the second memory 102 to the application information, the MM may directly exit a memory allocation process, and output first alarm information. The first alarm information may include a reason why the MM cannot allocate the memory space of the second memory 102 to the application information.

S23: If the application information is the sensitive information and remaining memory space of the first memory 101 can satisfy the current memory allocation application, the MM allocates the memory space of the first memory 101 to the application information.

In some embodiments, if the process P1 applies to the MM for allocating the memory space of the first memory 101, and the MM determines that the remaining memory space of the first memory 101 can satisfy the current memory allocation application, the MM allocates the memory space of the first memory 101 to the application information. If the MM determines that the remaining memory space of the first memory 101 cannot satisfy the current memory allocation application, the MM may perform content release on a physical block of the first memory 101 until the remaining memory space satisfies the current memory allocation application.

In some embodiments, if the MM cannot allocate the memory space of the first memory 101 to the application information, the MM may directly exit the memory allocation process, and output second alarm information. The second alarm information may include a reason why the MM cannot allocate the memory space of the first memory 101 to the application information.

S24: The MM registers information related to the current memory allocation with an in-use block information table of the first memory 101.

In some embodiments, the MM may include the in-use block information table of the first memory 101. When the MM allocates the memory space of the first memory 101 to the application information, the MM may register the information related to the current memory allocation into the in-use block information table of the first memory 101. The MM maintains the in-use block information table of the first memory 101 in real time, to learn information such as which physical blocks are occupied in the first memory 101, timestamps of the occupied physical blocks, and data/code occupying the physical blocks, thereby facilitating subsequent swap-out and swap-in operations of the sensitive information.

S25: The MM performs mapping between a virtual memory page and a physical memory page.

In some embodiments, the MM maps a virtual memory page to a physical memory page in a page table, to bind the virtual memory address to the physical memory address. In this way, a CPU can subsequently access, based on the virtual memory page, information stored on the physical memory page corresponding to the virtual memory page.

S26: The MM marks the virtual memory page as a sensitive memory page, and configures the sensitive memory page as non-cache.

In some embodiments, a page table includes a plurality of page table entries, and one page table entry corresponds to one virtual memory page. The MM may use an unused field in the page table entry as a sensitivity mark, and mark the virtual memory page corresponding to the sensitive information as the sensitive memory page. For example, a sensitive mark field in a page table entry is configured, so that some virtual memory pages (physical memory pages corresponding to these virtual memory pages are used to store the sensitive information) recorded in a page table are classified as sensitive memory pages, and other virtual memory pages are classified as non-sensitive memory pages.

In some embodiments, for a virtual memory page of the sensitive information, to prevent an attacker from stealing the sensitive information from a cache, the MM may configure the sensitive memory page in the page table as non-cache, to disable a cache function of the sensitive information. When the CPU reads the sensitive information subsequently, the sensitive information is not cached, thereby resisting a cache side-channel attack.

S27: If the application information is the sensitive information and the remaining memory space of the first memory 101 cannot satisfy the current memory allocation application, the MM cyclically selects a recently unused physical block from the in-use block information table of the first memory 101, and performs content release on the physical block until the remaining memory space of the first memory 101 can satisfy the current memory allocation application, and the MM allocates the memory space of the first memory 101 to the application information.

In some embodiments, when the application information is the sensitive information and the remaining memory space of the first memory 101 cannot satisfy the current memory allocation application, the MM may cyclically select a recently unused physical block from the in-use block information table of the first memory 101, and perform content release on the selected physical block. The physical block on which content release is performed does not occupy the memory space of the first memory 101. The remaining memory space of the first memory 101 is increased by performing content release on the selected one or more physical blocks, until the remaining memory space of the first memory 101 can satisfy the current memory allocation application. When the remaining memory space of the first memory 101 can satisfy the current memory allocation application, the MM allocates the memory space of the first memory 101 to the application information, and may continue to perform steps S24 and S25. Content stored in the selected physical block may be the application information of the first app A1, or may be application information of another app. This is not limited in this application.

In some embodiments, the MM may select a recently unused physical block from the in-use block information table of the first memory 101 by using a least frequently used algorithm, a least recently used algorithm, a first-in-first-out algorithm, and the like. After content release is performed on a selected physical block, when the remaining memory space of the first memory 101 still cannot satisfy the current memory allocation application, the MM continues to select a next physical block from the in-use block information table of the first memory 101, and performs content release on the selected physical block until the remaining memory space of the first memory 101 can satisfy the current memory allocation application.

S28: Before content of the physical block is released, the CPU encrypts the content of the physical block by using a preset encryption algorithm, and writes the encrypted content into the second memory 102.

In some embodiments, a swap-out operation may be performed on content stored in the first memory 101, to release the memory space of the first memory 101 and avoid loss of information in the first memory 101. Specifically, before the content of the physical block is released, the content of the physical block may be encrypted by using the preset encryption algorithm, and the encrypted content is written into the second memory 102. For example, the preset encryption algorithm is an AES-GCM algorithm, and the CPU may read information such as a KEY and an IV of the AES-GCM algorithm from the second storage area SA2 of the first memory 101, and read information related to integrity check of the AES-GCM algorithm from the second memory 102.

S29: When the encrypted content is written into the second memory 102, the MM updates the page table, and sets permission of a virtual memory page corresponding to the encrypted content to be inaccessible.

In some embodiments, because the encrypted content is swapped out from the first memory 101 to the second memory 102, the MM may update the page table, so that a virtual memory page of the content corresponds to a new physical memory page. The MM may modify a physical memory page mapped to the virtual memory page, to modify the virtual memory page of the content from being mapped to a physical memory page of the first memory 101 to being mapped to a physical memory page of the second memory 102.

In some embodiments, the MM may further set the virtual memory page of the content to be inaccessible in the page table. In this way, a permission fault interrupt is triggered when the CPU accesses the encrypted content, and the encrypted content may be decrypted and swapped into the first memory 101 based on the permission fault interrupt, so that the CPU can read plaintext of the content from the first memory 101.

In some embodiments, the MM may further store original permission information of the content into the page table. For example, the MM may store the original permission information of the content by using an unused field in the page table entry, so that when the content is subsequently swapped into the first memory 101, the original permission information of the content may be read from the page table, and permission recovery is performed.

As shown in FIG. 9, the page table entry includes 64 bits. 47 bits are used to store physical address information of a physical memory page corresponding to a virtual memory page, and bits occupied by an unused field may be used to store original permission information of sensitive information swapped out of the second memory 102 and a sensitive memory page mark.

S30: After the content of the physical block is released, the MM unbinds the mapping between the physical memory page and the virtual memory page in the physical block.

In some embodiments, after content of a physical block is released, because the physical block becomes an idle physical block, the MM may unbind, in a page table, mapping between a physical memory page and a virtual memory page included in the physical block. In this way, when new sensitive information is subsequently stored into the physical block, a mapping relationship between the virtual memory page and the physical memory page may be established.

For the first app A1, the CPU may access sensitive information plaintext stored in the first memory 101 and non-sensitive information plaintext stored in the second memory 102 in the following manner. When executing the process P1, the CPU may operate the virtual memory address, and the MM may automatically map the operation on the virtual memory address to the physical memory address, so that the CPU may read the sensitive information plaintext stored in the first memory 101, or read the non-sensitive information plaintext stored in the second memory 102.

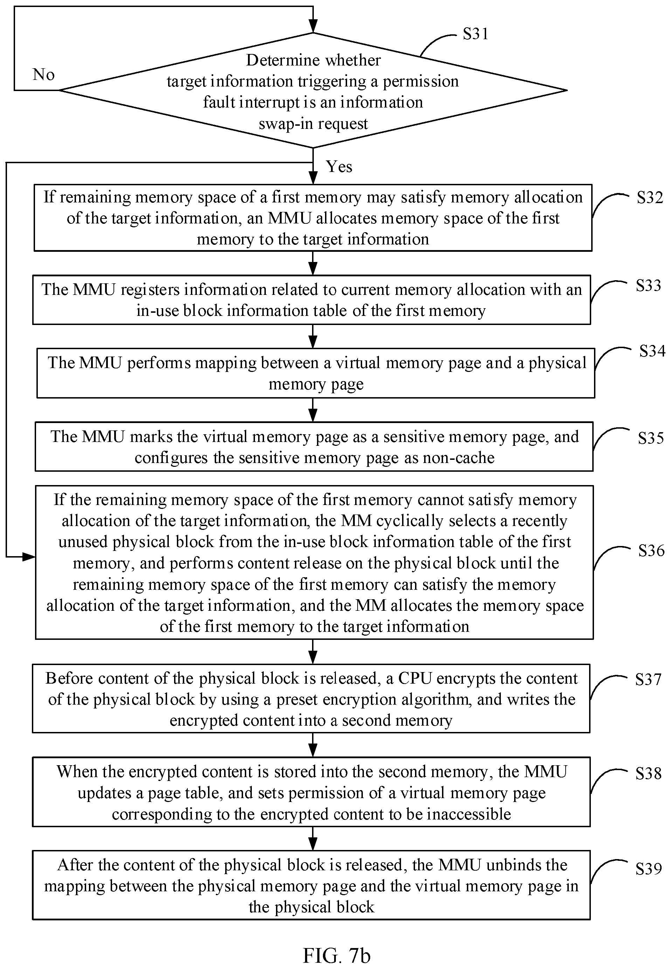

However, for sensitive information ciphertext that is encrypted and stored in the second memory 102, the CPU cannot read the sensitive information ciphertext because inaccessible permission is set. In this application, the sensitive information ciphertext may be converted into the sensitive information plaintext for reading by using the encrypted-information access process shown in FIG. 7b, and the sensitive information plaintext may be prevented from being stolen.

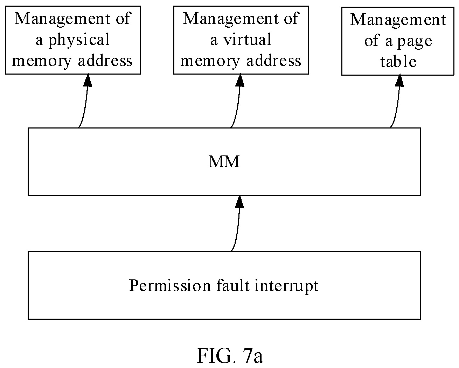

As shown in FIG. 7a, in the encrypted information access process, when it is determined that target information triggering a permission fault interrupt is an information swap-in request, the MM may implement management of a physical memory address, management of a virtual memory address, management of a page table, and the like.

As shown in FIG. 7b, the encrypted information access process may specifically include the following steps.

S31: Determine whether target information triggering a permission fault interrupt is an information swap-in request.

In some embodiments, for the electronic device 10, it is a common phenomenon that accessing information by the CPU triggers the permission fault interrupt, and the permission fault interrupt may not be caused by accessing the encrypted sensitive information stored in the second memory 102. Whether the target information triggering the permission fault interrupt is the information swap-in request may be determined by determining whether a page table entry of the target information triggering the permission fault interrupt has a sensitive memory page identifier and whether the target information is stored in the first memory 101. When the page table entry of the target information triggering the permission fault interrupt has the sensitive memory page identifier, and the target information is not currently stored in the first memory 101, it may be determined that the permission fault interrupt is triggered because some information that is encrypted and swapped out to the second memory 102 is accessed, and the target information needs to be decrypted and swapped into the first memory 101.

In some embodiments, when it is determined that the target information needs to be swapped into the first memory 101, the MM may allocate the memory space of the first memory 101 to the target information, to swap the target information into the first memory 101. When the target information triggering the permission fault interrupt is not the information swap-in request, execution of an original permission fault interrupt processing process continues.

S32: If the remaining memory space of the first memory 101 may satisfy memory allocation of the target information, the MM allocates the memory space of the first memory 101 to the target information.

In some embodiments, after the MM allocates the memory space of the first memory 101 to the target information, the CPU may invoke the encryption and decryption unit 1042 to perform decryption processing on the target information, and write decrypted target information plaintext into the first memory 101. Subsequently, the CPU may read the target information plaintext from the first memory 101, and perform corresponding information processing.

In some embodiments, because permission of the target information stored in the second memory 102 is set to be inaccessible, when the decrypted target information plaintext is written into the first memory 101, original permission information of the target information plaintext further needs to be restored. For example, original permission information of the target information stored previously may be read from an IGNORED field in a page entry, and then permission of the target information plaintext stored in the first memory 101 is set to the original permission information.

In some embodiments, when the decrypted target information plaintext is written into the first memory 101, the information may be written at a granularity of a virtual memory page. Because the information is written at a granularity of a page, the MM may modify a virtual memory page of the target information from being mapped to a physical memory page of the second memory 101 to being mapped to the physical memory page of the first memory 101, to implement unified addressing of the first memory 101 and the second memory 102.

S33: The MM registers information related to the current memory allocation with an in-use block information table of the first memory 101.

S34: The MM performs mapping between a virtual memory page and a physical memory page.

S35: The MM marks the virtual memory page as a sensitive memory page, and configures the sensitive memory page as non-cache.

S36: If the remaining memory space of the first memory 101 cannot satisfy memory allocation of the target information, the MM cyclically selects a recently unused physical block from the in-use block information table of the first memory 101, and performs content release on the physical block until the remaining memory space of the first memory 101 can satisfy the memory allocation of the target information, and the MM allocates the memory space of the first memory 101 to the target information.

S37: Before content of the physical block is released, the CPU encrypts the content of the physical block by using a preset encryption algorithm, and writes the encrypted content into the second memory 102.

S38: When the encrypted content is written into the second memory 102, the MM updates the page table, and sets permission of a virtual memory page corresponding to the encrypted content to be inaccessible.

S39: After the content of the physical block is released, the MM unbinds the mapping between the physical memory page and the virtual memory page in the physical block.

Refer to FIG. 10. An embodiment of this application provides an information processing method, applied to an electronic device 10. In this embodiment, the information processing method may include the following steps.

S40: When loading application information, obtain an attribute of the application information.

In some embodiments, an operating system and application software may be installed on the electronic device 10. The application software may be software that provides a service or is oriented to a user. The electronic device 10 may be a device such as a server, a mobile phone, or a computer. The following uses an example in which the electronic device 10 is a mobile phone and a first app A1 is installed on the electronic device for description. When the electronic device 10 starts the first app A1, application information of the first app A1 needs to be processed into a memory, so that the first app A1 can run normally on the electronic device 10. The application information of the first app A1 may be data, code, and/or the like required for running the first app A1.

In some embodiments, an application developer performs sensitivity classification on the application information of the first app A1 according to an actual requirement. The application information may be classified into two types and marked differently. One type is sensitive information that needs to be protected, and an information attribute thereof is referred to as a first attribute. The other type is non-sensitive information that does not need to be protected, and an information attribute thereof is referred to as a second attribute. For example, a section name of the application information may be configured, to identify the attribute of the application information. When the application information is the sensitive information, the section name of the application information is set to first content, and the first content indicates that the attribute of the application information is the first attribute. When the application information is the non-sensitive information, the section name of the application information is set to second content, and the second content indicates that the attribute of the application information is the second attribute. During subsequent application information processing, the attribute of the application information may be obtained by obtaining the section name of the application information.

For example, a key, a token, and a whitelist associated with the first app A1, user privacy data, core code of the first app A1, or the like may be classified as the sensitive information, and other data or code may be classified as the non-sensitive information.

S41: If the attribute of the application information is the first attribute, write the application information into a first memory 101, or encrypt the application information and write the encrypted application information into a second memory 102.

For the electronic device 10, the memory usually includes an on-chip memory and a system memory. The system memory has a large capacity, and is usually a DRAM. For example, a memory module on a computer main board or a server main board is the system memory. An attacker may steal application information in the system memory through a physical attack method such as an interface/bus monitoring attack, a DMA attack, or a cold boot attack. The on-chip memory is usually an OCM of a CPU. The on-chip memory has a small capacity, and is usually an SRAM. Because the on-chip memory is integrated in the CPU, the on-chip memory can resist physical attacks such as the interface/bus monitoring attack, the DMA attack, and the cold boot attack. In this embodiment, the first memory 101 is the on-chip memory, and the second memory 102 is the system memory.

If the attribute of the application information is the first attribute, it indicates that the application information is the sensitive information, and the application information may be preferentially written into the first memory 101, so that when subsequently accessing the application information, the CPU may read the application information from the first memory 101. In addition, because an attacker cannot steal information from the first memory 101 through the physical attack method such as the DMA attack or the cold boot attack, security of the sensitive information can be improved.

In some embodiments, if the application information is the sensitive information, the application information may alternatively be directly encrypted and written into the second memory 102. When subsequently accessing the application information, the CPU may first decrypt the application information and swap the application information into the first memory 101, and then read the application information from the first memory 101. This can also improve security of the sensitive information.

In some embodiments, if the application information is the sensitive information, and remaining memory space of the first memory 101 cannot meet a writing requirement of the application information, the application information may alternatively be encrypted and written into the second memory 102. When subsequently accessing the application information, the CPU may first decrypt the application information and swap the application information into the first memory 101, and then read the application information from the first memory 101.

In some embodiments, when the application information is written into the first memory 101, the remaining memory space of the first memory 101 may be first obtained, to determine whether there is sufficient memory space for writing the application information. When storage space required by the application information is greater than the remaining memory space of the first memory 101, it indicates that memory space of the first memory 101 is insufficient. In this case, writing of the application information cannot be completed. Some of currently unused information in the first memory 101 may be swapped out and stored into the second memory 102, to increase the remaining memory space of the first memory 101. For example, encryption processing may be performed on first information in the first memory 101, and the encrypted first information is written into the second memory 102, to release memory space that is of the first memory 101 and that is occupied by the first information. In this way, the first memory 101 has sufficient storage space for writing the application information, and then the application information is written into the first memory 101. When the storage space required by the application information is less than the remaining memory space of the first memory 101, it indicates that the memory space of the first memory 101 is sufficient, and the application information may be directly written into the first memory 101. The first information may be information whose attribute is the first attribute. The first information may be information about the first app A1, or may be information about another app. When the first information is encrypted and swapped out to the second memory 102, the first information is partial information currently stored in the first memory 101.

In some embodiments, the first information may be selected from the first memory 101 by using a preset replacement algorithm. The preset replacement algorithm may include one of a least frequently used algorithm, a least recently used algorithm, or a first-in-first-out algorithm. Information in the first memory 101 may be swapped out and stored into the second memory 102 in a unit of one physical block. A physical block may be cyclically selected from the first memory 101 by using the preset replacement algorithm. Information in the physical block is swapped out and stored into the second memory 102, and the information in the physical block is released until the remaining memory space of the first memory 101 is greater than the storage space required by the application information.

In some embodiments, when the first information is swapped out from the first memory 101 and stored into the second memory 102, a mapping relationship between a corresponding virtual memory address interval and a physical memory address interval in a page table may be maintained, so that an upper-layer application is unaware of a swap-out and storage operation of the first information. For example, the MM maintains a page table P1 corresponding to the first app A1. For the first information stored in the first memory 101, the page table P1 records a correspondence between a first virtual address interval and a first physical address interval that are allocated to the first information. When the first information is swapped out of the first memory 101 and stored into the second memory 102, the MM may remove the correspondence that is between the first virtual address interval and the first physical address interval and that is recorded in the page table P1, and establish a correspondence between the first virtual address interval and a second physical address interval. The first physical address interval is a physical address that is in the first memory 101 and that is used to store the first information, and the second physical address interval is a physical address that is in the second memory 102 and that is used to store the first information.

In some embodiments, the first information stored in the first memory 101 has permission (referred to as original permission below). For example, the original permission is readable, writable, and non-executable. When the first information is swapped out of the first memory 101 and stored into the second memory 102, the permission of the first information stored in the second memory 102 is set to be inaccessible, so that the encrypted first information is subsequently swapped in and stored into the first memory 101 again based on a permission fault interrupt. The original permission of the first information may be stored into the page table P1, so that when the encrypted first information is subsequently swapped in and stored into the first memory 101, the original permission of the first information may be found in the page table P1, to perform permission recovery.

In some embodiments, when accessing the first information that is encrypted and stored in the second memory 102, the CPU may first perform decryption processing on the encrypted first information, and then write the decrypted first information into the first memory 101, so that the CPU can read the first information from the first memory 101, to successfully access the first information. After the decrypted first information is written into the first memory 101, memory space that is of the second memory 102 and that is occupied by the first information may be released.

In some embodiments, to enable the decrypted first information to be written into the first memory 101, whether the first memory 101 currently has sufficient memory space for writing the first information also needs to be determined. Specifically, the remaining memory space of the first memory 101 may be first obtained. When storage space required by the decrypted first information is greater than the remaining memory space of the first memory 101, it indicates that the memory space of the first memory 101 is insufficient. In this case, writing of the first information cannot be completed. Some of currently unused information in the first memory 101 may be swapped out and stored into the second memory 102 again, to increase the remaining memory space of the first memory 101. For example, encryption processing may be first performed on partial information in the first memory 101, and the encrypted partial information is written into the second memory 102, to release memory space that is of the first memory 101 and that is occupied by the partial information. In this way, the first memory 101 has sufficient storage space for writing the first information, and then the first information is written into the first memory 101. When the storage space required by the first information is less than the remaining memory space of the first memory 101, it indicates that the memory space of the first memory 101 is sufficient, and the first information may be directly written into the first memory 101.

When the first information is written into the first memory 101, the original permission of the first information may be obtained by searching the page table P1, so that the permission of the first information written into the first memory 101 may be restored from being inaccessible to the original permission.

In some embodiments, to cope with a cache side-channel attack, a cache function may be further disabled in a page table entry of the page table P1, and a virtual memory page corresponding to the application information is configured as non-cache, to disable a cache function of the application information. When the CPU reads the application information from the first memory 101 subsequently, the application information is not cached, so that an attacker cannot steal the application information from a cache.

In some embodiments, because the permission of the first information stored in the second memory 102 is set to be inaccessible, when the CPU accesses the first information, a permission fault interrupt is triggered. Whether the first information triggering the permission fault interrupt is an information swap-in request may be determined by determining whether a page table entry of the first information triggering the permission fault interrupt has a sensitive memory page identifier and whether the first information is stored in the first memory 101. When the page table entry of the first information triggering the permission fault interrupt has the sensitive memory page identifier, and the first information is not currently stored in the first memory 101, it may be determined that the permission fault interrupt is triggered because information that is encrypted and swapped out to the second memory 102 is accessed, and the first information needs to be decrypted and swapped into to the first memory 101.

In some embodiments, if the application information is encrypted and written into the second memory 102, permission of the application information may be set to be inaccessible, so that the encrypted application information is subsequently swapped in and stored into the first memory 101 again based on a permission fault interrupt. For example, the application information is encrypted from an external memory 103 and written into the second memory 102, and original permission of the application information (permission when the application information is stored in the external memory 103) may be stored into the page table P1, to facilitate subsequent permission recovery. When accessing the application information that is encrypted and stored in the second memory 102, the CPU may first perform decryption processing on the encrypted application information, and then write the decrypted application information into the first memory 101, so that the CPU can read the application information from the first memory 101, to successfully access the application information. After the decrypted application information is written into the first memory 101, memory space that is of the second memory 102 and that is occupied by the application information may be released.

In some embodiments, to enable the decrypted application information to be written into the first memory 101, whether the first memory 101 currently has sufficient memory space for writing the application information also needs to be determined. Specifically, the remaining memory space of the first memory 101 may be first obtained. When storage space required by the decrypted application information is greater than the remaining memory space of the first memory 101, it indicates that the memory space of the first memory 101 is insufficient. In this case, writing of the application information cannot be completed. Some of currently unused information in the first memory 101 may be swapped out and stored into the second memory 102, to increase the remaining memory space of the first memory 101. For example, encryption processing may also be first performed on partial information in the first memory 101, and the encrypted partial information is written into the second memory 102, to release memory space that is of the first memory 101 and that is occupied by the partial information. In this way, the first memory 101 has sufficient storage space for writing the application information. For example, when the remaining memory space of the first memory 101 is greater than or equal to the storage space required by the application information, the application information is written into the first memory 101. When the storage space required by the application information is less than the remaining memory space of the first memory 101, it indicates that the memory space of the first memory 101 is sufficient, and the decrypted application information may be directly written into the first memory 101.

When the application information is written into the first memory 101, the original permission of the application information may be obtained by searching the page table P1, so that the permission of the application information written into the first memory 101 may be restored from being inaccessible to the original permission.

S42: If the attribute of the application information is the second attribute, write the application information into the second memory 102.

In some embodiments, if the attribute of the application information is the second attribute, it indicates that the application information is the non-sensitive information, and the application information may be written into the second memory 102, so that when subsequently accessing the application information, the CPU reads the application information from the second memory 102. To be specific, for the application information, if the attribute of the application information is the first attribute, the application information may be written into the second memory 102 in a form of ciphertext, and if the attribute of the application information is the second attribute, the application information may be written into the second memory 102 in a form of plaintext.

In the foregoing information processing method, application information that needs to be protected can be flexibly configured. Sensitive information of application software is allowed to be encrypted and stored in a second memory or stored in plaintext in a first memory, and non-sensitive information may be stored in plaintext in the second memory, so that memory storage security of the sensitive information can be improved. In addition, because it is not required to process all application information of the application software in the first memory, the first memory can be used on demand, and storage resource requirements of the first memory are greatly reduced. Therefore, the information processing method has higher availability and has wider application scenarios. In this way, this solution may be applied to a device scenario in which on-chip storage resources, such as a mobile intelligent terminal and an internet of things device, are very limited, and is compatible with an existing memory paging mechanism, and has a capability of resisting a cache side-channel attack.

An embodiment further provides a computer storage medium. The computer storage medium stores computer instructions. When the computer instructions are run on an electronic device, the electronic device is enabled to perform the foregoing related method steps to implement the information processing method in the foregoing embodiments.

An embodiment further provides a computer program product. When the computer program product runs on a computer, the computer is enabled to perform the foregoing related steps to implement the information processing method in the foregoing embodiments.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, to enable the chip to perform the information processing method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

The description of the foregoing implementations allows a person skilled in the art to clearly understand that, for the purpose of convenient and brief description, division of the foregoing functional modules is used as merely an example for description. In actual application, the foregoing functions can be allocated to different functional modules for implementation as required. In other words, an inner structure of an apparatus is divided into different functional modules to implement all or some of the functions described above.

In the several embodiments provided in this application, it should be understood that the disclosed apparatus and method may be implemented in other manners. For example, the apparatus embodiments described above are examples. For example, division into the modules or units is logical function division and may be other division during actual implementation. For example, a plurality of units or components may be combined or integrated into another apparatus, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may be one or more physical units, may be located in one place, or may be distributed in different places. Some or all of the units may be selected based on actual needs to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. An information processing method, wherein the information processing method comprises:
when loading application information, obtaining an attribute of the application information;
if the attribute of the application information is a first attribute, writing the application information into a first memory, or encrypting the application information and writing the encrypted application information into a second memory, wherein the first memory is disposed in a processor, and the second memory is disposed independently of the processor; and
if the attribute of the application information is a second attribute, writing the application information into the second memory.

2. The information processing method according to claim 1, wherein the first attribute indicates that the application information is sensitive information, the second attribute indicates that the application information is non-sensitive information, the first memory is an on-chip memory OCM, and the second memory is a dynamic random access memory DRAM.

3. The information processing method according to claim 1 or 2, wherein the writing the application information into a first memory comprises:
obtaining remaining memory space of the first memory;
when storage space required by the application information is greater than the remaining memory space of the first memory, encrypting first information in the first memory, and writing the encrypted first information into the second memory, wherein the first information is application information having the first attribute;
releasing memory space that is of the first memory and that is occupied by the first information, so that the remaining memory space of the first memory is greater than or equal to the storage space required by the application information; and
writing the application information into the first memory.

4. The information processing method according to claim 1 or 2, wherein the writing the application information into a first memory comprises:
obtaining remaining memory space of the first memory;
when storage space required by the application information is greater than the remaining memory space of the first memory, encrypting the application information and writing the encrypted application information into the second memory; and
when the storage space required by the application information is less than the remaining memory space of the first memory, writing the application information into the first memory.

5. The information processing method according to claim 3, wherein the information processing method further comprises:
obtaining a page table associated with the first information, wherein the page table records a correspondence between a first virtual address interval and a first physical address interval that are allocated to the first information; and
removing the correspondence that is between the first virtual address interval and the first physical address interval and that is recorded in the page table, and establishing a correspondence between the first virtual address interval and a second physical address interval, wherein the first physical address interval is a physical address of the first memory, and the second physical address interval is a physical address of the second memory.

6. The information processing method according to claim 5, wherein the information processing method further comprises:
storing original permission of the first information into the page table associated with the first information.

7. The information processing method according to claim 3, wherein the encrypting first information in the first memory comprises:
selecting the first information from the first memory by using a preset replacement algorithm, wherein the preset replacement algorithm comprises one of a least frequently used algorithm, a least recently used algorithm, or a first-in-first-out algorithm; and
encrypting the first information.

8. The information processing method according to claim 3, wherein the information processing method further comprises:
setting permission of the first information stored in the second memory to be inaccessible.

9. The information processing method according to claim 8, wherein the information processing method further comprises:
decrypting the encrypted first information in response to an access request for the encrypted first information;
writing the decrypted first information into the first memory; and
releasing memory space that is of the second memory and that is occupied by the first information.

10. The information processing method according to claim 9, wherein the writing the decrypted first information into the first memory comprises:
obtaining the remaining memory space of the first memory;
when storage space required by the decrypted first information is greater than the remaining memory space of the first memory, encrypting partial information in the first memory, and writing the encrypted partial information into the second memory;
releasing memory space that is of the first memory and that is occupied by the partial information, so that the remaining memory space of the first memory is greater than or equal to the storage space required by the decrypted first information; and
writing the decrypted first information into the first memory.

11. The information processing method according to claim 9, wherein after the writing the decrypted first information into the first memory, the method comprises:
obtaining original permission of the first information from a page table associated with the first information; and
restoring permission of the first information stored in the first memory from inaccessibility to the original permission of the first information.

12. The information processing method according to claim 9, wherein the writing the decrypted first information into the first memory comprises:
when the access request triggers an access permission fault interrupt, writing the decrypted first information into the first memory.

13. The information processing method according to claim 1, wherein the information processing method further comprises:
obtaining a page table associated with the application information, wherein the page table records a virtual address interval allocated to the application information, the virtual address interval comprises several pages, and the page table comprises several page table entries that are in one-to-one correspondence with the several pages; and
configuring a page table entry belonging to the first attribute to be non-cacheable, wherein the page table entry comprises a field used to mark an attribute.

14. The information processing method according to claim 1, wherein after the encrypting the application information and writing the encrypted application information into a second memory, the method comprises:
decrypting the encrypted application information in response to an access request for the encrypted application information;
writing the decrypted application information into the first memory; and
releasing memory space that is of the second memory and that is occupied by the application information.

15. The information processing method according to claim 14, wherein the writing the decrypted application information into the first memory comprises:
obtaining remaining memory space of the first memory;
when storage space required by the decrypted application information is greater than the remaining memory space of the first memory, encrypting partial information in the first memory, and writing the encrypted partial information into the second memory;
releasing memory space that is of the first memory and that is occupied by the partial information, so that the remaining memory space of the first memory is greater than or equal to the storage space required by the decrypted application information; and
writing the decrypted application information into the first memory.

16. The information processing method according to claim 14, wherein the information processing method further comprises:
setting permission of the application information stored in the second memory to be inaccessible.

17. The information processing method according to claim 16, wherein after the writing the decrypted application information into the first memory, the method comprises:
obtaining original permission of the application information from a page table associated with the application information; and
restoring permission of the application information stored in the first memory from inaccessibility to the original permission of the application information.

18. The information processing method according to any one of claims 1 to 17, wherein the information processing method further comprises:
when the application information is information about a trusted application, configuring the first memory to be accessible by a trusted execution environment TEE but inaccessible by a rich execution environment REE.

19. The information processing method according to any one of claims 1 to 17, wherein the information processing method further comprises:
dividing the first memory into a first storage area and a second storage area, wherein the first storage area is used to store application information whose attribute is the first attribute, and the second storage area is used to store a key used to encrypt and decrypt the application information and an initialization vector IV.

20. A computer-readable storage medium, comprising computer instructions, wherein when the computer instructions are run on an electronic device, the electronic device is enabled to perform the information processing method according to any one of claims 1 to 19.

21. An electronic device, wherein the electronic device comprises a display, an audio module, a processor, and a memory, wherein the memory is configured to store instructions, and the processor is configured to invoke the instructions in the memory, so that the electronic device is enabled to perform the information processing method according to any one of claims 1 to 19.

22. A chip, coupled to a memory in an electronic device, wherein the chip is configured to control the electronic device to perform the information processing method according to any one of claims 1 to 19.
